# FASCICULE DE BREVET EUROPEEN

(11) **EP 3 108 443 B1**
(45) Date de publication et mention de la délivrance du brevet: **04.09.2019**
(21) Numéro de dépôt: 15705799.3
(22) Date de dépôt: 16.02.2015
(51) Int. Cl.: G06T 3/40

(54) **PROCÉDÉ DE REDIMENSIONNEMENT EN CONTINU D'UN DOCUMENT NUMÉRIQUE GRAPHIQUE**
VERFAHREN ZUR KONTINUIERLICHEN NEUDIMENSIONIERUNG EINES GRAFISCHEN DIGITALEN DOKUMENTS
METHOD FOR CONTINUOUSLY RESIZING A GRAPHIC DIGITAL DOCUMENT

(30) Priorité: 18.02.2014 FR 1451289
(43) Date de publication de la demande: 28.12.2016
(73) Titulaire: Networth, 75009 Paris (FR)
(72) Inventeur: TAILHEURET, Jean-Bernard, 75001 Paris (FR)
(74) Mandataire: Casalonga
(86) Numéro de dépôt international: PCT/EP2015/053185
(87) Numéro de publication internationale: WO 2015/124518

(56) Documents cités:
- EP-A1- 2 293 251
- EP-A2- 0 848 351
- WO-A1-92/21097
- US-A1- 2004 004 641
- JUN-SEONG KIM ET AL: "Adaptive image and video retargeting technique based on Fourier analysis", IEEE CONFERENCE ON COMPUTER VISION AND PATTERN RECOGNITION. CVPR 2009; MIAMI, FLORIDA, USA, 20 - 25 JUNE 2009, 20 juin 2009 (2009-06-20), pages 1730-1737, XP031607193,
- CHEN Y: "DETECTING WEB PAGE STRUCTURE FOR ADAPTIVE VIEWING ON SMALL FORM FACTOR DEVICES", INTERNET CITATION, mai 2003 (2003-05), XP002312703, Extrait de l'Internet: URL:http://research.microsoft.com/asia/dlo ad_files/group/system/p297-chen.pdf [extrait le 2005-01-07]
- PIERRE DRAGICEVIC ET AL: "Artistic resizing", UIST 2005 PROCEEDINGS OF THE 18TH ANNUAL ACM SYMPOSIUM ON USER INTERFACE SOFTWARE AND TECHNOLOGY , SEATTLE, WASHINGTON, US, ACM, NEW YORK, US, 23 October 2005 (2005-10-23), pages 201-210, XP058335933, DOI: 10.1145/1095034.1095069 ISBN: 978-1-59593-271-6
- Alexandre Demeure ET AL: "Design by Example of Graphical User Interfaces Adapting to Available Screen Size" In: "Computer-Aided Design of User Interfaces VI", January 2008 (2008-01), Springer London, London, XP55426508, pages 277-282,

## Description

L'invention concerne un procédé de redimensionnement d'un document numérique graphique, et plus particulièrement un procédé de redimensionnement continu, selon des règles graphiques d'affichage imposées, d'un document numérique graphique.

Dans le domaine de la représentation visuelle de documents numériques de communication, il est important d'appliquer certaines règles d'affichage. Ceci afin de respecter certains codes de communication pour marquer plus facilement les esprits et que le public retienne mieux l'information affichée.

Les règles graphiques peuvent notamment comprendre des règles permettant de positionner avec exactitude des composants d'un document numérique graphique à des endroits précis. Par exemple, pour un affichage publicitaire, il peut être important de toujours positionner un nom dans un cadre supérieur et une image donnée dans un cadre inférieur et de les positionner l'un par rapport à l'autre selon un positionnement relatif choisi.

Par exemple, une annonce publicitaire de presse peut ainsi être créée selon des règles graphiques données et réalisée pour correspondre à un nombre restreint de dimensions de pages de magazines représentatifs, habituellement utilisés dans un pays.

Malheureusement, d'un pays à un autre les dimensions des pages des magazines varient énormément. Et cela arrive même au sein d'un même pays. Il en est de même avec la plupart des emplacements publicitaires : affichage, page de magazine, vitrine d'un magasin, abribus, meuble merchandising, caisson PLV, etc.

Les agences locales de communication modifient généralement le document numérique d'origine en fonction des dimensions du support d'affichage tel qu'un panneau d'affichage d'abribus ou une page de magazine. Cependant, ce redimensionnement est généralement réalisé sans toujours tenir compte des règles graphiques définies en amont. Ceci a pour conséquence qu'une partie de la force du message informatif transmis par l'affiche et/ou que la cohérence de la communication sont perdues de par la non reproductibilité exacte des règles graphiques qu'on nomme aussi charte de communication.

On pourra se référer au document PIERRE DRAGICEVIC ET AL : « Artistic resizing », UIST 2005 PROCEEDINGS OF THE 18TH ANNUAL ACM SYMPOSIUM ON USER INTERFACE SOFTWARE AND TECHNOLOGY, SEATTLE, WASHINGTON, US, ACM, NEW YORK, US, 23 octobre 2005 (2005-10-23), pages 201-210, XP058335933, qui décrit le redimensionnement artistique d'un objet graphique en tenant compte de plusieurs contraintes. Néanmoins, ce document ne permet pas de pallier la conservation de règles graphiques car il ne décrit pas la détermination des facteurs de redimensionnement et de positionnement à partir d'un couple d'affichages reçu.
On pourra également se référer au document « Design by Example of Graphical User Interfaces Adapting to Available Screen Size », In : « Computer-Aided Design of User Interfaces VI », janvier 2008 (2008-01), Springer London, London, XP55426508, pages 277-282, qui concerne la création d'interfaces générées en fonction des contraintes d'affichage, notamment la taille.

Et dans un cas où les agences de communication locales ont recours à des experts pour réaliser ce travail en respectant les règles graphiques, cela entraîne d'importants coûts supplémentaires pour l'entreprise.

L'invention se propose de pallier ces inconvénients en fournissant un système associé à un procédé de redimensionnement continu d'un document numérique graphique permettant de générer un document numérique respectant des règles graphiques données quelles que soient les dimensions réelles d'affichage du document numérique.

Selon un aspect de l'invention, il est proposé un système de redimensionnement continu d'un document numérique graphique, le document numérique comprenant une page d'affichage et des composants à afficher sur la page d'affichage.

Selon une caractéristique générale de l'invention, le système comprend des moyens de réception d'un couple d'affichage du document numérique graphique comprenant un premier affichage du document numérique et un second affichage du document numérique distinct du premier, le premier affichage comprenant un premier dimensionnement de la page d'affichage et un premier positionnement et dimensionnement des composants à afficher et le second affichage comprenant un second dimensionnement de la page d'affichage et un second positionnement et dimensionnement des composants à afficher, des moyens de détermination des facteurs de redimensionnement de la page d'affichage entre le premier affichage et le second affichage du couple d'affichage, et des moyens de détermination pour chacun des composants à afficher des facteurs de transformation et de repositionnement entre le premier affichage et le second affichage du couple d'affichage.

Le couple d'affichage peut être un couple de cadrages définis chacun par une hauteur et une largeur dans une unité donnée.

Les coefficients de redimensionnement de la page d'affichage permettent de déterminer les dimensions d'une page d'affichage comprises entre les dimensions de la page d'affichage du premier affichage et celles de la page d'affichage du second affichage. Les coefficients de transformation et de redimensionnement sont déterminés pour chacune des caractéristiques définissant un composant à afficher. Les coefficients de transformation et de redimensionnement peuvent comprendre un vecteur de translation, un facteur d'échelle, un facteur d'homothétie et/ou un coefficient d'angle de rotation. Il est ainsi possible d'afficher sur écran ou d'imprimer n'importe quelle dimension, à condition que les dimensions de la page d'affichage soient comprises ou obtenues par un changement d'échelle entre celles de la page d'affichage du premier affichage et celles de la page d'affichage du second affichage du couple d'affichage.

Au moins un composant comprend une fenêtre de visualisation et un élément apte à être au moins partiellement contenu dans la fenêtre de visualisation, les dimensions de la fenêtre de visualisation étant indépendantes des dimensions et de la position dudit élément.

Ledit élément peut être une image dont la portion visible est définie par la fenêtre de visualisation. Les dimensions et la forme de la fenêtre de visualisation peuvent ainsi varier entre le premier affichage et le second affichage, de même que la taille de l'image. La position relative de la fenêtre de visualisation par rapport à l'image pouvant varier, et les dimensions de la fenêtre de visualisation et celles de l'image variant indépendamment l'une de l'autre, la portion visible de l'image peut varier entre le premier affichage et le second affichage. L'exemple d'un élément image peut être élargi à tous éléments visuels.

Avantageusement, le système peut comprendre des moyens de réalisation d'une séquence animée présentant de manière continue une transformation du premier affichage au second affichage.

La séquence animée ainsi réalisée permet d'offrir un outil de présentation dynamique et continu pour visualiser les différents affichages du document numérique.

Les moyens de réalisation d'une séquence animée peuvent avantageusement comprendre un module d'assemblage apte à assembler successivement la transformation continue d'une pluralité de couples d'affichage distincts.

De cette manière, il est possible de réaliser une même séquence comportant toutes les dispositions d'affichage prévues pour un document numérique graphique.

Selon un autre aspect de l'invention, il est proposé un procédé de redimensionnement continu d'un document numérique graphique, le document numérique comprenant une page d'affichage et des composants à afficher sur la page d'affichage.

Selon une caractéristique générale de l'invention, le procédé comprend les étapes suivantes :
a) la réception d'un couple d'affichage du document numérique comprenant un premier affichage du document numérique et un second affichage du document numérique, le premier affichage comprenant un premier dimensionnement de la page d'affichage et un premier positionnement et dimensionnement des composants à afficher et le second affichage comprenant un second dimensionnement de la page d'affichage et un second positionnement et dimensionnement des composants à afficher,
b) une détermination des facteurs de redimensionnement de la page d'affichage entre le premier affichage et le second affichage du couple d'affichage, et
c) pour chacun des composants (2, 3, 4) à afficher, une détermination des facteurs de transformation et de positionnement entre le premier affichage et le second affichage du couple d'affichage.

Avantageusement, le procédé peut comprendre au moins une itération supplémentaire des étapes a) à c), chaque itération supplémentaire comprenant un couple d'affichage différent des couples d'affichage déjà mis en oeuvre lors de la ou des itération(s) précédente(s).

Le procédé peut également comprendre la réalisation d'une séquence animée présentant de manière continue la transformation de chaque couple d'affichage de manière successive.

Selon un autre aspect de l'invention, il est proposé un système informatique comprenant des moyens configurés pour mettre en oeuvre le procédé tel que défini ci-dessus.

Selon encore un autre aspect de l'invention, il est proposé un produit programme d'ordinateur chargeable directement dans une mémoire d'un système informatique, comprenant des portions de code de logiciel pour l'exécution du procédé tel que défini ci-dessus lorsque ledit programme est exécuté par ledit système informatique.

Selon encore un autre aspect de l'invention, il est proposé un support lisible par un système informatique ayant des instructions exécutables par ordinateur adaptées pour provoquer l'exécution par le système informatique du procédé tel que défini ci-dessus.

D'autres avantages et caractéristiques de l'invention apparaîtront à l'examen de la description détaillée d'un mode de mise en oeuvre et d'un mode de réalisation de l'invention, nullement limitatifs, et des dessins annexés, sur lesquels :
- la figure 1 représente un organigramme d'un procédé de redimensionnement continu d'un document numérique selon un mode de mise en oeuvre de l'invention ;
- la figure 2 illustre un affichage initial et un affichage final d'un couple d'affichages d'un document numérique à redimensionner selon le procédé de la figure 1 ; et
- la figure 3 présente de manière schématique un système de redimensionnement continu d'un document numérique selon un mode de réalisation de l'invention apte à mettre en oeuvre le procédé de la figure 1.

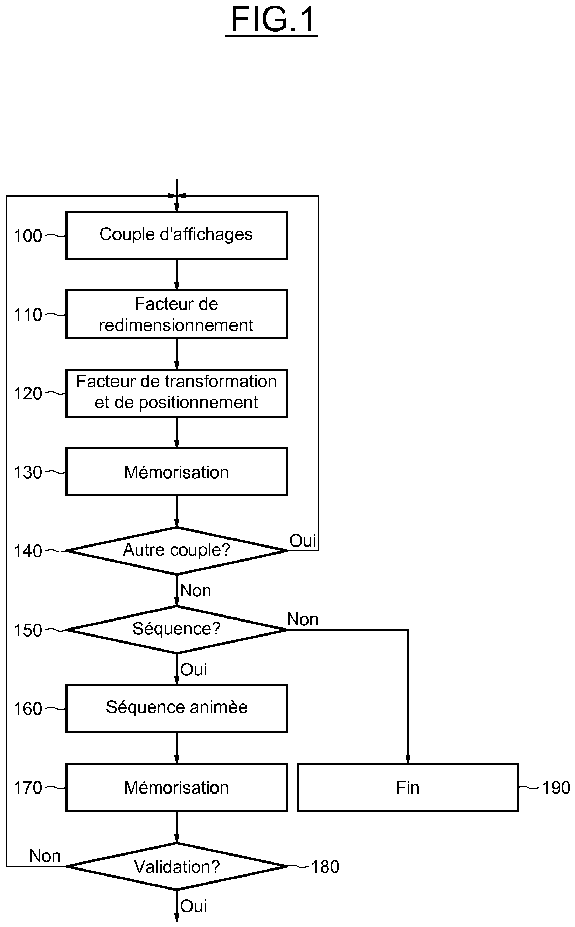

Sur la figure 1 est représenté un organigramme d'un procédé de redimensionnement continu d'un document numérique selon un mode de mise en oeuvre de l'invention.

Dans une première étape 100, un système apte à mettre en oeuvre le procédé reçoit un couple d'affichages d'un document numérique à l'aide notamment de moyens de chargement de données numériques.

Le couple d'affichages comprend un affichage initial du document numérique et un affichage final du document numérique pour un même type de présentation du document numérique.

Le document numérique comprend différents composants à afficher sur une page d'affichage. Dans cet exemple, la page d'affichage de l'affichage initial possède des dimensions plus petites que les dimensions de la page d'affichage de l'affichage final du couple d'affichages.

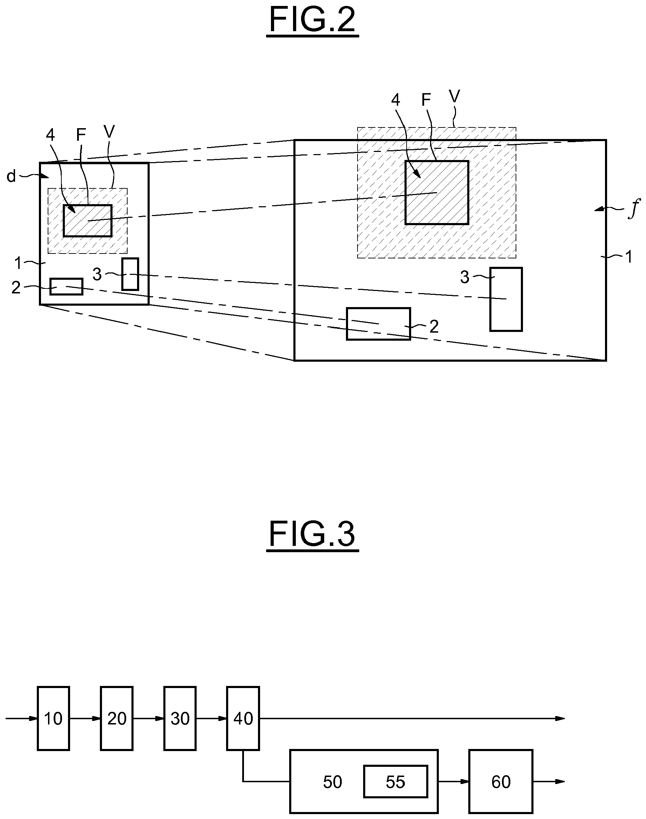

Sur la figure 2 sont représentés l'affichage initial *d* et l'affichage final *f* d'un couple d'affichages d'un document numérique. Les deux affichages *d* et *f* du couple présentent une disposition différente des composants 2, 3 et 4 sur leur page d'affichage 1 respective. L'affichage initial *d* et l'affichage final *f* définissent ainsi des règles graphiques à suivre pour passer de l'affichage initial *d* à l'affichage final *f*.

Les dimensions de la page d'affichage 1 de l'affichage initial d pouvant différer des dimensions de la page d'affichage 1 de l'affichage final *f* d'un couple d'affichages , le positionnement relatif entre deux composants, 2 et 3 par exemple, peut varier en distance absolue entre deux affichages. Les dimensions de la page d'affichage 1 peuvent varier en conservant un rapport de longueur fixe ou bien en faisant varier ce rapport comme cela est illustré dans l'exemple présenté sur la figure 2.

En outre, dans l'exemple illustré sur la figure 2, le composant référencé 4 comprend un élément visuel V tel qu'une image possédant ses propres dimensions. Pour ne pas déformer l'image, le rapport entre ses dimensions est conservé entre l'affichage initial *d* et l'affichage final *f*. Seul un facteur d'homothétie est appliqué aux dimensions de manière à agrandir l'image.

Le composant 4 comprend également une fenêtre de visualisation *F* permettant de sélectionner une portion de l'élément visuel V à afficher. Les dimensions de la fenêtre sont indépendantes de l'élément visuel V et peuvent varier indépendamment les unes des autres sans conserver forcément un rapport constant contrairement à l'élément visuel V dans cet exemple illustré sur la figure 2. La fenêtre de visualisation *F* est définie pour l'affichage initial *d* par un premier ensemble de dimensions définissant une surface et une forme de fenêtre. La fenêtre de visualisation *F* est définie pour l'affichage final *f* par un second ensemble de dimensions définissant une surface et une forme de fenêtre différant de celles définies par le premier ensemble de dimensions.

Dans une deuxième étape 110 illustrée sur la figure 1, le système détermine les facteurs de redimensionnement de la page d'affichage 1 permettant de déterminer les dimensions d'une page d'affichage comprise entre la page d'affichage 1 du premier affichage *d* et la page d'affichage 1 du second affichage *f*.

Dans une troisième étape 120, le système détermine des coefficients de transformation et de positionnement pour chacun des composants entre l'affichage initial *d* et l'affichage final *f* du couple d'affichages.

Les coefficients de transformation et de positionnement sont déterminés pour chaque caractéristique structurelle d'un composant du couple d'affichage. La détermination des coefficients permet ainsi d'afficher le document numérique, et par exemple d'en réaliser une impression, avec n'importe quelles dimensions pour la page d'affichage 1 comprises ou obtenues par un facteur d'échelle entre les dimensions de la page d'affichage 1 de l'affichage initial *d* et les dimensions de la page d'affichage 1 de l'affichage final *f* du couple d'affichages.

Dans une quatrième étape 130, le système mémorise ces facteurs de redimensionnement de la page d'affichage 1 et ces coefficients de transformation et de positionnement des composants 2 à 4 avec le couple d'affichages.

Dans une étape suivante 140, le système vérifie s'il existe un autre couple d'affichages en attente de réception.

S'il y en a un, le système reprend les étapes 100 à 130 pour un autre couple d'affichages. Et cela, tant qu'il y a un autre couple d'affichages en attente de réception.

Dès qu'il n'y a plus de couple d'affichages en attente de réception, le système vérifie dans une étape 150 si une séquence animée est requise.

Si la séquence animée est requise, le système, dans une étape 160, réalise une succession de séquences animées présentant la transformation continue pour chaque couple d'affichages mémorisés et concatène la succession de séquences animées de manière à former une séquence animée générale présentant la transformation de chacun des couples d'affichages. La séquence animée générale est alors mémorisée dans une étape suivante 170.

Sinon, le procédé prend fin dans une étape 190.

A la suite de l'étape 170 de mémorisation, le système requiert dans une étape 180 une validation de la séquence animée mémorisée. Si la validation est entrée par un utilisateur le procédé prend fin, sinon, le procédé reprend à l'étape 100 avec un nouveau couple d'affichages.

Le procédé peut également être réalisé en chargeant dans le système tous les couples d'affichages à la fois, puis en déterminant les facteurs de redimensionnement et les coefficients de transformation et de positionnement pour chaque couple d'affichages et en mémorisant les coefficients et les facteurs déterminés associés avec le couple d'affichages correspondant.

Sur la figure 3 est représenté de manière schématique un système de redimensionnement continu d'un document numérique selon un mode de réalisation de l'invention apte à mettre en oeuvre le procédé de la figure 1.

Le système comprend des moyens 10 de réception d'un affichage initial *d* et d'un affichage final *f* d'un couple d'affichages du document numérique.

Le système comprend en outre une unité de traitement des données reçues comportant un premier module 20 apte à déterminer le facteur de dimensionnement de la page d'affichage 1 et un second module 30 apte à calculer les coefficients de transformation et de positionnement des composants 2 à 4 à afficher entre l'affichage initial *d* et l'affichage final *f* du couple d'affichages considéré pour réaliser le document numérique avec n'importe quelles dimensions comprises ou obtenues par un facteur d'échelle entre les dimensions de l'affichage initial *d* et les dimensions l'affichage final *f*.

Le système comprend également des premiers moyens de mémorisation 40 aptes à mémoriser le couple d'affichage et les facteurs de dimensionnement et les coefficients de transformation et de positionnement associés.

Les moyens de réception 10, le premier module 20, le second module 30 et les moyens de mémorisation 40 sont raccordés en série dans l'exemple illustré. Il est possible de réaliser tout autre raccordement ou bien de regrouper ses moyens dans une seule et même unité permettant de réaliser les étapes correspondantes du procédé défini ci-dessus.

Le système de redimensionnement comprend aussi des moyens 50 de réalisation d'une séquence animée comportant un module d'assemblage 55. Les moyens de réalisation d'une séquence animée permettent de réaliser une présentation animée continue de la transformation d'un couple d'affichages, et le module d'assemblage permet de réaliser une séquence animée générale à partir de l'assemblage d'une série de séquences animées pour les différents couples d'affichages mémorisés.

Le système comprend enfin des seconds moyens de mémorisation 60 aptes à mémoriser chaque séquence animée et/ou la séquence animée générale générées par les moyens 50. Les seconds moyens de mémorisation 60 peuvent être confondus avec les premiers moyens de mémorisation 40.

Le procédé, et le système associé, de redimensionnement continu d'un document numérique permet ainsi d'afficher sur écran ou d'imprimer toute dimension comprise ou obtenue par un changement d'échelle entre deux affichages d'un couple d'affichages tout en respectant les règles graphiques initialement imposées par l'utilisateur dans les deux affichages du couple d'affichages.

## Revendications

1. Système de redimensionnement continu d'un document numérique graphique, le document numérique comprenant une page d'affichage (1) et des composants (2, 3, 4) à afficher sur la page d'affichage (1), comprenant :
a) des moyens (10) de réception d'un couple d'affichage du document numérique comprenant un premier affichage (d) du document numérique et un second affichage (f) du document numérique distinct du premier affichage (d), le premier affichage (d) comprenant un premier dimensionnement de la page d'affichage (1) et un premier positionnement et dimensionnement des composants (2, 3, 4) à afficher et le second affichage (f) comprenant un second dimensionnement de la page d'affichage (1) et un second positionnement et dimensionnement des composants (2, 3, 4) à afficher, et au moins un composant (4) comprend une fenêtre de visualisation (F) et un élément (V) apte à être partiellement contenu dans la fenêtre de visualisation (F), les dimensions de la fenêtre de visualisation (F) étant indépendantes des dimensions et de la position dudit élément (V), la fenêtre de visualisation (F) étant définie pour l'affichage final (f) par un second ensemble de dimensions définissant une surface et une forme de fenêtre différent, après le redimensionnement, de celles définies par le premier ensemble de dimensions,
b) des moyens (20) de détermination de facteurs de redimensionnement de la page d'affichage (1) entre le premier affichage (d) et le second affichage (f) du couple d'affichage, et
c) des moyens (30) de détermination pour chacun des composants (2, 3, 4) à afficher de coefficients de transformation par redimensionnement des composants et de positionnement des composants à afficher entre le premier affichage (d) et le second affichage (f) du couple d'affichage.

2. Système selon la revendication 1, comprenant des moyens de réalisation (50) d'une séquence animée présentant de manière continue une transformation du premier affichage (d) au second affichage (f).

3. Système selon la revendication 2, dans lequel les moyens de réalisation (50) d'une séquence animée comprennent un module d'assemblage (55) apte à assembler successivement la transformation continue d'une pluralité de couples d'affichage distincts.

4. Procédé de redimensionnement continu d'un document numérique graphique, le document numérique comprenant une page d'affichage et des composants à afficher sur la page d'affichage, comprenant :
a) la réception (100) d'un couple d'affichage du document numérique comprenant un premier affichage (d) du document numérique et un second affichage (f) du document numérique distinct du premier affichage (d), le premier affichage (d) comprenant un premier dimensionnement de la page d'affichage (1) et un premier positionnement et dimensionnement des composants (2, 3, 4) à afficher et le second affichage (f) comprenant un second dimensionnement de la page d'affichage (1) et un second positionnement et dimensionnement des composants (2, 3, 4) à afficher, et au moins un composant (4) comprend une fenêtre de visualisation (F) et un élément (V) apte à être partiellement contenu dans la fenêtre de visualisation (F), les dimensions de la fenêtre de visualisation (F) étant indépendantes des dimensions et de la position dudit élément (V), la fenêtre de visualisation (F) étant définie pour l'affichage final (f) par un second ensemble de dimensions définissant une surface et une forme de fenêtre différent, après le redimensionnement, de celles définies par le premier ensemble de dimensions,
b) une détermination (110) des facteurs de redimensionnement de la page d'affichage (1) entre le premier affichage (d) et le second affichage (f) du couple d'affichage, et
c) pour chacun des composants (2, 3, 4) à afficher, une détermination (120) de coefficients de transformation par redimensionnement des composants et de positionnement des composants à afficher entre le premier affichage (d) et le second affichage (f) du couple d'affichage.

5. Procédé selon la revendication 4, dans lequel le procédé comprend au moins une itération supplémentaire des étapes a) à c), chaque itération supplémentaire comprenant un couple d'affichage différent des couples d'affichage déjà mis en oeuvre lors de la ou des itération(s) précédente(s).

6. Procédé selon la revendication 5, **caractérisé en ce qu'**il comprend la réalisation (160) d'une séquence animée présentant de manière continue la transformation de chaque couple d'affichage de manière successive.

7. Produit programme d'ordinateur chargeable directement dans une mémoire d'un système informatique, comprenant des portions de code de logiciel pour l'exécution du procédé selon l'une des revendications 4 à 6 lorsque ledit programme est exécuté par ledit système informatique.

8. Support lisible par un système informatique ayant des instructions exécutables par ordinateur adaptées pour provoquer l'exécution par le système informatique du procédé selon l'une des revendications 4 à 6.

## Patentansprüche

1. System zur kontinuierlichen Neudimensionierung eines graphischen digitalen Dokuments, wobei das digitale Dokument eine Anzeigeseite (1) und auf der Anzeigeseite (1) anzuzeigende Komponenten (2, 3, 4) enthält, das enthält:
a) Einrichtungen (10) zum Empfang eines Anzeigepaars des digitalen Dokuments, das eine erste Anzeige (d) des digitalen Dokuments und eine zweite Anzeige (f) des digitalen Dokuments anders als die erste Anzeige (d) enthält, wobei die erste Anzeige (d) eine erste Dimensionierung der Anzeigeseite (1) und eine erste Positionierung und Dimensionierung der anzuzeigenden Komponenten (2, 3, 4) enthält, und die zweite Anzeige (f) eine zweite Dimensionierung der Anzeigeseite (1) und eine zweite Positionierung und Dimensionierung der anzuzeigenden Komponenten (2, 3, 4) enthält, und mindestens eine Komponente (4) ein Sichtfenster (F) und ein Element (V) enthält, das teilweise im Sichtfenster (F) enthalten sein kann, wobei die Dimensionen des Sichtfensters (F) von den Dimensionen und der Position des Elements (V) unabhängig sind, wobei das Sichtfenster (F) für die endgültige Anzeige (f) durch eine zweite Einheit von Dimensionen definiert wird, die eine andere Fensterfläche und -form nach der Neudimensionierung definiert als diejenigen, die von der ersten Einheit von Dimensionen definiert werden,
b) Einrichtungen (20) zur Bestimmung von Neudimensionierungsfaktoren der Anzeigeseite (1) zwischen der ersten Anzeige (d) und der zweiten Anzeige (f) des Anzeigepaars, und
c) Einrichtungen (30) zur Bestimmung für jede der anzuzeigenden Komponenten (2, 3, 4) von Koeffizienten der Umwandlung durch Neudimensionierung der Komponenten und Positionierung der anzuzeigenden Komponenten zwischen der ersten Anzeige (d) und der zweiten Anzeige (f) des Anzeigepaars.

2. System nach Anspruch 1, das Einrichtungen zur Durchführung (50) einer animierten Sequenz enthält, die kontinuierlich eine Umwandlung von der ersten Anzeige (d) zur zweiten Anzeige (f) aufweist.

3. System nach Anspruch 2, wobei die Einrichtungen zur Durchführung (50) einer animierten Sequenz ein Zusammenfügungsmodul (55) enthalten, das nacheinander die kontinuierliche Umwandlung einer Vielzahl unterschiedlicher Anzeigepaare zusammenfügen kann.

4. Verfahren zur kontinuierlichen Neudimensionierung eines graphischen digitalen Dokuments, wobei das digitale Dokument eine Anzeigeseite und auf der Anzeigeseite anzuzeigende Komponenten enthält, das enthält:
a) den Empfang (100) eines Anzeigepaars des digitalen Dokuments, das eine erste Anzeige (d) des digitalen Dokuments und eine zweite Anzeige (f) des digitalen Dokuments anders als die erste Anzeige (d) enthält, wobei die erste Anzeige (d) eine erste Dimensionierung der Anzeigeseite (1) und eine erste Positionierung und Dimensionierung der anzuzeigenden Komponenten (2, 3, 4) enthält, und die zweite Anzeige (f) eine zweite Dimensionierung der Anzeigeseite (1) und eine zweite Positionierung und Dimensionierung der anzuzeigenden Komponenten (2, 3, 4) enthält, und mindestens eine Komponente (4) ein Sichtfenster (F) und ein Element (V) enthält, das teilweise im Sichtfenster (F) enthalten sein kann, wobei die Dimensionen des Sichtfensters (F) von den Dimensionen und der Position des Elements (V) unabhängig sind, wobei das Sichtfenster (F) für die endgültige Anzeige (f) durch eine zweite Einheit von Dimensionen definiert wird, die eine Fensterfläche und eine Fensterform definieren, die nach der Neudimensionierung anders als diejenigen sind, die von der ersten Einheit von Dimensionen definiert werden,
b) eine Bestimmung (110) der Neudimensionierungsfaktoren der Anzeigeseite (1) zwischen der ersten Anzeige (d) und der zweiten Anzeige (f) des Anzeigepaars, und
c) für jede der anzuzeigenden Komponenten (2, 3, 4) eine Bestimmung (120) von Koeffizienten der Umwandlung durch Neudimensionierung der Komponenten und Positionierung der anzuzeigenden Komponenten zwischen der ersten Anzeige (d) und der zweiten Anzeige (f) des Anzeigepaars.

5. Verfahren nach Anspruch 4, wobei das Verfahren mindestens eine zusätzliche Iteration der Schritte a) bis c) enthält, wobei jede zusätzliche Iteration ein Anzeigepaar enthält, das sich von den Anzeigepaaren unterscheidet, die bereits bei der oder den vorhergehenden Iteration(en) verwendet wurden.

6. Verfahren nach Anspruch 5, **dadurch gekennzeichnet, dass** es die Erzeugung (160) einer animierten Sequenz enthält, die kontinuierlich die aufeinanderfolgende Umwandlung jedes Anzeigepaars aufweist.

7. Computerprogrammprodukt, das direkt in einen Speicher eines Informatiksystems geladen werden kann, das Softwarecodeteile zur Ausführung des Verfahrens nach einem der Ansprüche 4 bis 6 enthält, wenn das Programm vom Informatiksystem ausgeführt wird.

8. Träger, der von einem Informatiksystem lesbar ist, das von einem Computer ausführbare Anweisungen hat, die geeignet sind, die Ausführung des Verfahrens nach einem der Ansprüche 4 bis 6 durch das Informatiksystem zu bewirken.

## Claims

1. System for continuous redimensioning of a graphical digital document, the digital document comprising a display page (1) and components (2, 3, 4) to be displayed on the display page (1), comprising:
a) means (10) for receiving a display pair of the digital document comprising a first display (d) of the digital document and a second display (f) of the digital document distinct from the first display (*d*), the first display (d) comprising a first dimensioning of the display page (1) and a first positioning and dimensioning of the components (2, 3, 4) to be displayed and the second display (f) comprising a second dimensioning of the display page (1) and a second positioning and dimensioning of the components (2, 3, 4) to be displayed, and at least one component (4) comprises a viewing window (F) and an element (V) which is able to be partially contained in the viewing window (F), the dimensions of the viewing window (F) being independent of the dimensions and of the position of said element (V), the viewing window (F) being defined for the final display (f) by a second set of dimensions, defining a surface and a shape of window, different, after the redimensioning, from those defined by the first set of dimensions,
b) means (20) for determining factors for redimensioning of the display page (1) between the first display (d) and the second display (f) of the display pair, and
c) means (30) for determining, for each of the components (2, 3, 4) to be displayed, coefficients for transformation by redimensioning of the components and for positioning of the components to be displayed between the first display (d) and the second display (f) of the display pair.

2. System according to Claim 1, comprising means (50) for producing an animated sequence presenting in a continuous manner a transformation of the first display (d) to the second display (f).

3. System according to Claim 2, in which the means (50) for producing an animated sequence comprise an assembly module (55) able to successively assemble the continuous transformation of a plurality of distinct display pairs.

4. Method of continuous redimensioning of a graphical digital document, the digital document comprising a display page and components to be displayed on the display page, comprising:
a) the reception (100) of a display pair of the digital document comprising a first display (d) of the digital document and a second display (f) of the digital document distinct from the first display (d), the first display (d) comprising a first dimensioning of the display page (1) and a first positioning and dimensioning of the components (2, 3, 4) to be displayed and the second display (f) comprising a second dimensioning of the display page (1) and a second positioning and dimensioning of the components (2, 3, 4) to be displayed, and at least one component (4) comprises a viewing window (F) and an element (V) which is able to be partially contained in the viewing window (F), the dimensions of the viewing window (F) being independent of the dimensions and of the position of said element (V), the viewing window (F) being defined for the final display (f) by a second set of dimensions, defining a surface and a shape of window, different, after the redimensioning, from those defined by the first set of dimensions,
b) a determination (110) of the factors for redimensioning of the display page (1) between the first display (d) and the second display (f) of the display pair, and
c) for each of the components (2, 3, 4) to be displayed, a determination (120) of coefficients for transformation by redimensioning of the components and for positioning of the components to be displayed between the first display (d) and the second display (f) of the display pair.

5. Method according to Claim 4, in which the method comprises at least one additional iteration of steps a) to c), each additional iteration comprising a display pair different from the display pairs already implemented during the previous iteration (s) .

6. Method according to Claim 5, **characterized in that** it comprises the production (160) of an animated sequence presenting in a continuous manner the transformation of each display pair in a successive manner.

7. Computer program product loadable directly into a memory of a computer system, comprising portions of software code for the execution of the method according to one of Claims 4 to 6 when said program is executed by said computer system.

8. Medium readable by a computer system having computer-executable instructions adapted to bring about the execution by the computer system of the method according to one of Claims 4 to 6.
